# DEMANDE DE BREVET EUROPEEN

(11) **EP 2 266 853 A1**
(43) Date de publication de la demande: **29.12.2010**
(21) Numéro de dépôt: 10164585.1
(22) Date de dépôt: 01.06.2010
(51) Int. Cl.: B60T 8/1755, B60T 8/1766

(54) **Procédé de commande d'un système de freinage**

(30) Priorité: 15.06.2009 FR 0902907
(71) Demandeur: Robert Bosch GmbH, 70442 Stuttgart (DE)
(72) Inventeur: Bouchard, Christophe, 95100, Argenteuil (FR); Bisserier, Eric, 74182, Obersulm (DE); Clercin, Laurent, 02840, Athies sous Laon (FR); Wagon, Laurent, 51100, Reims (FR); Trefert, Pascal, 02190, Berry-au-Bac (FR)
(74) Mandataire: Hurwic, Aleksander Wiktor

(57) **Abrégé**

La présente invention se rapporte à un procédé de commande d'un système de freinage d'un véhicule, visant à éviter une levée d'un train arrière du véhicule au cours du freinage.

Plus particulièrement, l'invention se rapporte à un procédé destiné à commander un système (19) de freinage dans un véhicule (1), le véhicule comprenant au moins une roue avant (5) et au moins une roue arrière (3), **caractérisé en ce qu'**il comprend les étapes suivantes :
- détermination de l'existence d'au moins une condition de soulèvement de la roue arrière (3), et
- si oui, limitation et/ou réduction du freinage appliqué sur la roue avant (5) par le système de freinage du véhicule.

## Description

La présente invention se rapporte à un procédé de commande d'un système de freinage. Plus particulièrement l'invention se rapporte à un procédé de commande d'un système de freinage d'un véhicule, visant à éviter une levée d'un train arrière du véhicule au cours du freinage. L'invention est décrite pour le domaine de l'automobile mais peut être appliquée à d'autres domaines. Le procédé selon la présente invention est particulièrement performant pour des véhicules comportant au moins 3 roues de préférence 4 roues ou plus. En effet, le comportement des 2 roues motorisées, principalement des motos, est complètement différent de celui d'une voiture dans la mesure où la position (répartition de masse) et la rigidité (les forces appliquées) du conducteur influent sur les éventuelles levées de la roue avant ou de la roue arrière de la moto. En outre, les levées de la roue avant ou arrière peuvent être considérées par le conducteur comme participant au plaisir de la conduite sportive de leur moto.

Des procédés de commande d'un système de freinage sont décrits notamment dans US 5 386 366, EP 0 537 724, DE 10 2005 054557, EP 1 839 978 et EP 1 386 804.

Certains véhicules, par exemple de type utilitaires, sont conçus pour transporter des charges relativement importantes. Typiquement, un emplacement destiné à recevoir lesdites charges est situé à l'arrière du véhicule. Ledit véhicule est donc équilibré en tenant compte d'un poids supplémentaire important, situé dans sa partie arrière.

Or, il arrive que ce type de véhicule soit utilisé à vide. Dans ce cas, le centre de gravité du véhicule est décalé vers l'avant par rapport au cas d'un véhicule chargé. En cas de freinage brutal d'un véhicule utilitaire roulant à vide, il arrive que la partie arrière dudit véhicule ne dispose pas d'une inertie suffisante par rapport à la partie avant. Il s'ensuit une levée du train arrière du véhicule. Une telle levée est inconfortable et dangereuse pour les usagers du véhicule. De plus, si elle est trop importante, elle peut générer un basculement du véhicule.

Actuellement, aucune solution n'est présentée dans l'état de la technique pour lutter contre ce phénomène de levée du train arrière d'un véhicule.

Par ailleurs, un grand nombre de véhicules actuels sont équipés de systèmes d'assistance au freinage, comme des systèmes de type ABS (Antiblockiersystem). Les systèmes de correction de trajectoire, comme les systèmes de type ESP (Electronic Stability Program), sont également connus.

Le système ABS permet de réguler la puissance du freinage de chaque roue, afin d'éviter le blocage et le dérapage des roues lors du freinage. Le système ESP permet d'éviter et/ou de corriger les instabilités de trajectoire du véhicule, en effectuant un freinage sélectif d'une ou de plusieurs roues.

Pour pouvoir intervenir sur le comportement du véhicule dans le cadre du freinage et de la trajectoire, le système ABS et le système ESP doivent utiliser un grand nombre d'informations. Ces informations concernent aussi bien les caractéristiques que le comportement du véhicule.

Pour obtenir ces informations, un véhicule est équipé de différents capteurs, notamment des capteurs de vitesse, disséminés au niveau des trains roulants et de la direction. A partir des informations transmises par ces capteurs, le système ESP et le système ABS effectuent des calculs permettant de déterminer s'il existe un écart entre des valeurs souhaitées (par exemple de vitesse ou de décélération) et les valeurs réelles mesurées. Suite à ces calculs, le système ESP et le système ABS définissent des ordres à appliquer par les systèmes de freinage.

Par exemple, si une roue ralentit anormalement lors d'un freinage (c'est-à-dire qu'elle se bloque), l'ABS relâche la pression du circuit de freinage au niveau de cette roue, jusqu'à ce qu'elle ré-accélère suffisamment. Le système fonctionne par impulsions successives.

Pour sa part, le système ESP peut déclencher un freinage sélectif sur une ou des roues extérieures d'un véhicule, lorsqu'il détecte que ce dernier se trouve en situation de survirage. Il peut déclencher un freinage sélectif sur une ou des roues intérieures d'un véhicule, lorsqu'il détecte que ce dernier se trouve en situation de sous-virage.

Ces dispositifs sont couramment utilisés dans la conception des véhicules actuels. Il serait donc intéressant de proposer un procédé destiné à commander un système de freinage dans un véhicule, visant à éviter la levée du train arrière lors du freinage et pouvant faire intervenir certains éléments des systèmes ABS et/ou ESP.

La présente invention a donc pour objet un procédé destiné à commander un système de freinage dans un véhicule, le véhicule comprenant au moins une roue avant et au moins une roue arrière, **caractérisé en ce qu**'il comprend les étapes suivantes :
- détermination de l'existence d'au moins une condition de soulèvement de la roue arrière, et
- si au moins une telle condition est déterminée comme existante, limitation et/ou réduction du freinage appliqué sur la roue avant par le système de freinage du véhicule.

Selon une forme préférentielle de l'invention, une condition de soulèvement de la roue arrière est déterminée comme existante lorsqu'une décélération du véhicule dépasse une valeur prédéterminée.

Selon une forme préférentielle de l'invention, une condition de soulèvement de la roue arrière est déterminée comme existante lorsqu'une décélération des roues arrières dépasse une valeur prédéterminée.

Selon une forme préférentielle de l'invention, une condition de soulèvement de la roue arrière est déterminée comme existante lorsqu'un rapport de vitesses de la roue avant et de la roue arrière dépasse une valeur prédéterminée.

Selon une forme préférentielle de l'invention, une condition de soulèvement de la roue arrière est déterminée comme existante lorsqu'un rapport de décélérations de la roue arrière et de la roue avant dépasse une valeur prédéterminée.

Selon une forme préférentielle de l'invention, une condition de soulèvement de la roue arrière est déterminée comme existante lorsqu'une vitesse de glissement de l'une au moins des roues dépasse une valeur prédéterminée.

La présente invention a également pour objet un dispositif destiné à commander un système de freinage dans un véhicule, le véhicule comprenant au moins une roue avant et au moins une roue arrière, **caractérisé en ce qu**'il comporte des moyens de mise en oeuvre d'un procédé tel que décrit ci-dessus.

La présente invention a pour objet un procédé, un dispositif et un véhicule tels que revendiqués dans les revendications.

La présente invention a également pour objet un véhicule équipé d'un tel dispositif.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un véhicule pouvant être équipé de moyens de mise en oeuvre d'un procédé selon l'invention,
- Figure 2 : une représentation schématique d'un dispositif comportant des moyens de mise en oeuvre d'un procédé selon l'invention.

Les références listées ci-dessous correspondent aux différents éléments du procédé selon l'invention et des dispositifs mettant en oeuvre ce procédé :
1 - véhicule
2 - train arrière
3 - roue arrière
4 - train avant
5 - roue avant
6 - habitacle
7 - partie avant du véhicule 1
8 - partie arrière du véhicule 1
9 - capteur
10 - dispositif mettant en oeuvre le procédé selon l'invention
11 - dispositif de commande d'un système de freinage
12 - bus
13 - microprocesseur
14 - bus
15 - mémoire programme
16 - mémoire de données
17 - interface de communication avec les capteurs 9
18 - interface de communication avec le système 19
19 - système de freinage du véhicule 1
20 - logiciel

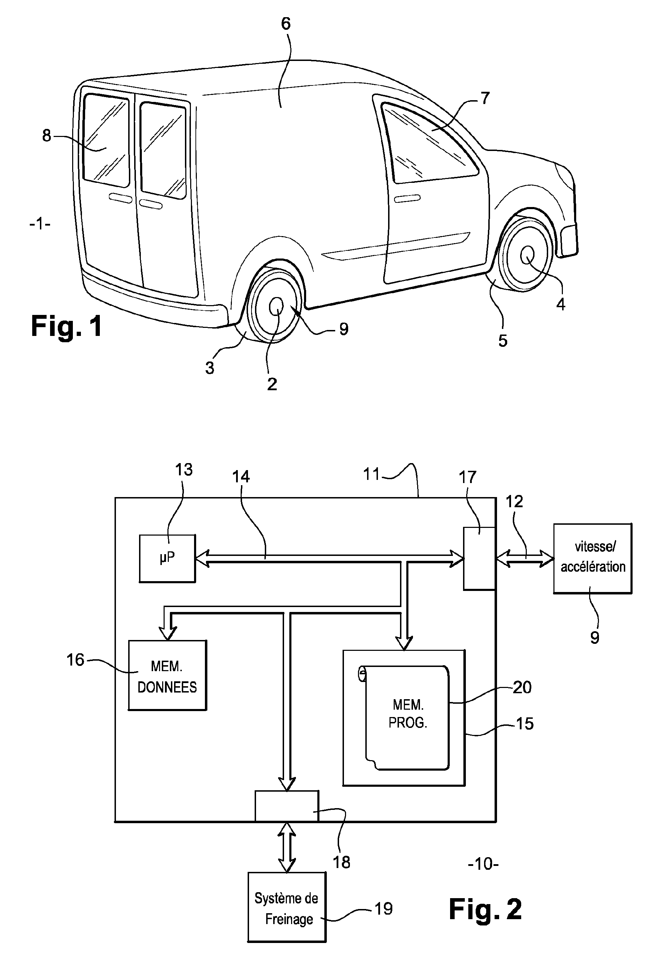

La figure 1 représente une vue en perspective d'un véhicule pouvant être équipé de moyens de mise en oeuvre d'un procédé selon l'invention. Il s'agit d'un véhicule 1 de type utilitaire. Il comporte notamment un train arrière 2, muni de deux roues arrières 3. Le véhicule 1 comporte également un train avant 4, muni de deux roues avant 5. De manière classique, les roues avant 5 et arrière 3 sont équipées de freins, contrôlés par un système de freinage.

Le véhicule 1 comporte également un habitacle 6, qui se divise en deux parties. Une partie avant 7 est destinée à recevoir un conducteur du véhicule 1. Une partie arrière 8 est destinée à recevoir des objets à transporter. Typiquement, la partie 8 peut recevoir un volume important d'objets. Par exemple, sa capacité est largement supérieure à celle d'un coffre de voiture familiale.

Il est courant que le véhicule 1 se déplace avec une charge importante dans sa partie arrière 8. Lors de sa conception, le véhicule 1 est donc équilibré en tenant compte d'un poids supplémentaire important, situé dans sa partie arrière 8.

Cependant, il arrive que le véhicule 1 circule sans qu'une charge n'ait été placée dans sa partie arrière 8. Dans ce cas, un centre de gravité du véhicule 1 est plus proche de la partie avant 7 que dans le cas où le véhicule 1 est chargé.

En cas de freinage brutal du véhicule 1 circulant sans charge dans sa partie 8, il arrive que ladite partie 8 ne dispose pas d'une inertie suffisante par rapport à la partie avant 7. Il s'ensuit une levée du train arrière 2 du véhicule par rapport au train avant 4. Cette levée peut aller jusqu'à un décollement du sol des roues arrières 3. Une telle levée est inconfortable et dangereuse pour les usagers du véhicule 1. De plus, si elle est trop importante, elle peut générer un basculement du véhicule 1.

Il est donc intéressant d'équiper le véhicule 1 de moyens de mise en oeuvre d'un procédé de commande du système de freinage, ce procédé visant à éviter le décollement des roues arrière 3 lors d'un freinage brutal. Le principe d'un tel procédé est voisin de celui régissant un système ABS. Il s'agit d'aider le conducteur à conserver la maîtrise de son véhicule dans une situation de freinage d'urgence.

Un procédé selon l'invention comprend notamment les étapes suivantes :
- Mesure de vitesses et/ou d'accélération / décélérations d'éléments du véhicule 1. Il peut s'agir de la vitesse de déplacement du véhicule 1, de la vitesse de rotation des roues avant 5 et/ou arrière 3, d'un rapport entre les vitesses des roues avant 5 et arrière 3 ou encore d'une vitesse de glissement des roues avant et/ou arrière sur le sol.
- Comparaison de l'une ou de plusieurs de ces mesures avec une ou des valeurs prédéterminées. On considère par exemple qu'une condition de soulèvement de la roue arrière est atteinte si au moins l'une des valeurs mesurées dépasse une valeur prédéterminée.
- Si une condition de soulèvement de la roue arrière est atteinte, limitation et/ou réduction du freinage appliqué sur la roue avant par le système de freinage du véhicule.

Ainsi, lorsque le train arrière du véhicule se soulève, un procédé selon l'invention commande une réduction du freinage sur le train avant 4. La décélération de la partie avant 7 du véhicule 1 s'en trouve diminuée. Cela rétablit l'équilibre entre les vitesses de la partie avant 7 et de la partie arrière 8, le précédent déséquilibre étant dû à la différence d'inertie desdites parties 7 et 8. Ainsi, le train arrière 2 cesse de se soulever et les roues arrière 3 reprennent contact avec le sol.

Les mesures de vitesses et/ou d'accélération / décélérations d'éléments du véhicule 1 nécessitent d'équiper ledit véhicule 1 de différents capteurs 9. Ces capteurs sont notamment situés sur le train avant 4 et sur le train arrière 2. Il est possible d'utiliser des capteurs faisant partie d'un système ABS et/ou d'un système ESP dont serait également équipé le véhicule 1.

La figure 2 montre un dispositif comportant des moyens de mise en oeuvre du procédé selon l'invention. Ce dispositif est destiné à équiper un véhicule, comme par exemple le véhicule 1. Ce dispositif 10 comporte un ou plusieurs capteurs 9. Ces capteurs sont localisés à divers emplacements du véhicule 1, notamment sur le train avant 4 et/ou sur le train arrière 2. Ces capteurs 9 sont susceptibles d'effectuer des mesures de vitesse et/ou d'accélération / décélération. Ces capteurs 9 peuvent également faire partie d'un système ABS et/ou d'un système ESP équipant le véhicule 1.

Le ou les capteurs 9 sont en relation avec un dispositif 11 de commande d'un système de freinage du véhicule 1. Un capteur 9 est par exemple connecté au dispositif 11 par un bus 12. Le dispositif 11 peut comporter un microprocesseur 13, mis en relation par un bus 14 avec une mémoire programme 15, une mémoire de données 16, une interface 17 de communication avec le ou les capteurs 9 et une interface 18 de communication avec un système 19 de freinage du véhicule 1.

A cet effet, la mémoire 15 mémorise un logiciel 20. Ce logiciel 20 permet le traitement des données transmises par les capteurs 9, la comparaison avec des valeurs mémorisées dans la mémoire de données 16 et la transmission d'une réponse appropriée au système 19 de freinage, via l'interface 18.

Selon une forme de l'invention, le logiciel 20 considère une décélération de déplacement du véhicule 1 et la compare avec une valeur prédéterminée, mémorisée dans la mémoire 16. On peut considérer dans ce cas qu'une décélération trop brutale du véhicule 1 est une condition de soulèvement des roues arrière 3.

Selon une autre forme de l'invention, le logiciel 20 considère une décélération de rotation d'une roue arrière 3 et la compare avec une valeur prédéterminée, mémorisée dans la mémoire 16. On peut considérer dans ce cas qu'une décélération brutale de rotation d'une roue avant 5 est une condition de soulèvement des roues arrière 3.

Selon une autre forme de l'invention, le logiciel 20 considère à la fois une vitesse de rotation d'une roue avant 5 et une vitesse de rotation d'une roue arrière 3. Lors d'un freinage du véhicule 1, le système de freinage agit typiquement sur les roues avant 5 et sur les roues arrière 3. Toutefois, les roues avant 5 sont en contact avec le sol. Elles subissent donc un entraînement et leur vitesse en rotation ne tombe pas immédiatement à zéro. Dans le cas contraire, le véhicule partirait en dérapage. L'objectif d'un système ABS est notamment d'éviter le blocage des roues pour éviter un dérapage du véhicule.

Si le train arrière 2 se lève et que les roues arrière 3 se décollent du sol, elles ne subissent pas le même entraînement que les roues avant 5. En raison de l'action du système de freinage, leur vitesse en rotation chute rapidement. On peut donc considérer qu'un rapport trop important entre une vitesse en rotation d'une roue avant 5 et une vitesse en rotation d'une roue arrière 3 est une condition de soulèvement des roues arrière 3. On peut également considérer une différence trop importante entre lesdites vitesses, c'est-à-dire qu'on soustrait les vitesses l'une à l'autre, au lieu de les diviser l'une par l'autre.

On peut également comparer les décélérations des roues au lieu de leurs vitesses. Dans ce cas, on peut considérer qu'un rapport trop important entre une décélération d'une roue arrière 3 et une décélération d'une roue avant 5 est une condition de soulèvement des roues arrière 3.

Selon une autre forme de l'invention, le logiciel 20 considère une vitesse de glissement des roues avant 5 et/ou arrière 3 sur le sol. Cette vitesse de glissement peut par exemple être obtenue en comparant une vitesse en rotation de la roue 3 ou 5 et une vitesse de déplacement du véhicule 1.

Dans le cas où les roues arrière 3 sont décollées du sol, il n'y a pas de glissement effectif desdites roues 3. Cependant, une valeur peut être obtenue par la comparaison de vitesses ci-dessus.

Selon cette forme de l'invention, on peut considérer qu'un glissement des roues supérieur à un certain seuil correspond à un freinage brutal ; ce freinage brutal pouvant être une condition de soulèvement des roues arrière 3.

Selon la présente invention, on peut régler le seuil de déclenchement du système selon la présente invention pour soit diminuer les chances que le système ne se déclenche pas du tout ou se déclenche avec retard en cas de lever des roues arrière (taux de faux négatif) ou au contraire pour augmenter le taux de déclenchement pouvant aller jusqu'à sensiblement 100% au prix d'une augmentation des distances d'arrêt et/ou des temps de ralentissement du véhicule. Toutefois, la finesse et la pertinence du choix du ou des critères déterminant le déclenchement du système et, avantageusement la diminution de l'intensité de l'intervention dans le cas où la probabilité d'être dans une situation des levées de roues est faible, permettent de gagner sur au moins un, de préférence les deux aspects (taux de faux négatif / distance d'arrêt). Ces critères sont avantageusement choisis en fonction, d'une part, du comportement mécanique au niveau de la liaison au sol du véhicule et, d'autre part, en fonction du type d'usage présumé par son conducteur. Par exemple, pour un véhicule sportif ainsi qu'en vue d'une conduite sportive, on va favoriser la diminution des distances d'arrêt. Au contraire, sur un véhicule familial et à fortiori sur un véhicule utilitaire, il peut s'avérer avantageux de diminuer le risque de non déclenchement du système ou du retard de son déclenchement. Un véhicule sera considéré comme ayant une liaison au sol performante si le rapport entre la hauteur de son centre de gravité et la distance entre l'essieu avant et le plan transversal passant par son centre de gravité est faible. Avantageusement, le système selon l'invention est paramétré pour des véhicules dont le rapport est supérieur à 1,2 de manière à éviter le non déclenchement ou le retard au déclenchement dans le cas de levée de roues (taux de faux négatif négligeable). Il s'avère que le critère de déclenchement correspondant à une décélération du véhicule inférieure à 7m/s² a une influence globalement néfaste sur le comportement dynamique du véhicule c'est-à-dire que les distances d'arrêt sont augmentées sans apporter un gain significatif au niveau du taux de détection qui est de toute façon voisin de 100%. Avantageusement, le critère de déclenchement d'intervention du système selon l'invention est supérieur ou égal à 7m/s² correspondant à un bon équilibre entre les distances d'arrêt et le taux de faux négatif pour un véhicule ayant un rapport entre la hauteur de son centre de gravité et la distance entre l'essieu avant et le plan transversal passant par son centre de gravité élevé (monospace, camionnette, SUV). Avantageusement, le critère de déclenchement correspond à une décélération du véhicule supérieure ou égale à 9m/s² pour la majorité des véhicules conduit par leur conducteur usuel. Pour des véhicules à comportement sportif comportant plus de 2 roues motrices typiquement pour des véhicules dits 4x4, et/ou pour des véhicules destinés au conducteur ayant une conduite sportive ainsi capables de contrôler un véhicule dans le cas d'une éventuelle levée de roues arrière exceptionnelle (taux de faux négatif très faible mais ne pouvant être complètement négligé), on utilisera un critère de déclenchement correspondant à une décélération du véhicule comprise entre 9,2m/s² et 10,3m/s², de préférence entre 9,3m/s² et 10m/s² par exemple égale à 9,5m/s² ou 9,7m/s².

En outre, il est possible dans les modes de réalisation particulièrement avantageux de la présente invention de gagner encore sur l'un ou l'autre (ou les deux) des critères (distance d'arrêt / taux de faux négatif) en combinant par la fonction logique « ET » avec un deuxième critère. Dans une première variante avantageuse de l'invention, le deuxième critère correspond, pour des roues arrière du véhicule subissant une action de système d'antiblocage des roues (ABS en terminologie anglo-saxonne), au glissement des roues arrière. De préférence, le glissement, ABS activé, est supérieur à 1 %, de préférence compris entre 1,9% et 5%, par exemple égal à 1,9%, 2%, 2,2% ou 3%. Avantageusement, on utilise des critères de déclenchement plus sévères (en tolérant un taux de faux négatif plus élevé) pour les véhicules sportifs et/ou ayant plus de 2 roues motrices (4x4, etc.).

Dans une autre variante de l'invention, le premier critère (décélération du véhicule) est combiné par la fonction logique « ET » avec un troisième critère concernant l'accélération tangentielle (positive) des roues (en cours de freinage). De préférence, l'accélération tangentielle positive des roues du troisième critère est comprise entre 2,5m/s² et 7m/s², de manière préférée entre 3m/s² et 6m/s², de manière encore préférée entre 3,5m/s² et 5,5m/s², par exemple égal à 3,5m/s², 4m/s² ou 5m/s². Avantageusement, on utilise des critères de déclenchement plus sévères (en tolérant un taux de faux négatif plus élevé) pour les véhicules sportifs et/ou ayant plus de 2 roues motrices (4x4, etc.).

Dans le mode préféré de réalisation on combine par les fonctions « ET » les premier, deuxième et troisième critères. En d'autres termes, on déclenche le système de défreinage ou on en augmente l'intensité quand la décélération du véhicule est supérieure à un seuil, par exemple égale à 8m/s², que (simultanément) le glissement des roues arrière est supérieur à un seuil par exemple égal à 2%, et que (simultanément) l'accélération positive tangentielle des roues arrière est supérieure à un seuil par exemple égale à 5m/s².

La combinaison des deux et à fortiori des trois critères de déclenchement permet soit :
a) de diminuer le taux de levée des roues arrière résiduel ;
b) d'augmenter la valeur individuelle de seuil du premier, deuxième ou troisième critère de déclenchement ou de leur combinaison adaptée au véhicule à équiper ; et ainsi de diminuer les distances d'arrêt ou le temps de ralentissement du véhicule dans des conditions de freinage d'urgence.

On peut également arbitrer, selon le cahier des charges du constructeur du véhicule, pour obtenir une combinaison des caractéristiques a) et/ou b) précitées.

Lorsqu'une condition de soulèvement des roues arrière 3 est considérée comme existante, le logiciel 20 envoie un ordre au système de freinage 19, *via* l'interface 18. Cet ordre vise à réduire ou à limiter le freinage des roues avant 5. Par exemple, la puissance de freinage peut être réduite d'un certain pourcentage, ledit pourcentage étant en relation avec un écart entre une valeur mesurée par un capteur 9 et une valeur mémorisée dans la mémoire 16. Un tableau de correspondance entre lesdits écarts et lesdits pourcentages peut être mémorisé dans la mémoire 16. Avantageusement le tableau est fixé pour un véhicule donné. Toutefois, la variation du tableau par apprentissage et/ou la mémorisation d'une pluralité de tableaux (par exemple un tableau adapté à une conduite tranquille, un tableau adapté à une conduite normale et un tableau adapté à une conduite sportive) ne sont pas du cadre de la présente invention. Les calculateurs du véhicule identifient le type de conduite mis en oeuvre par le conducteur et choisissent le tableau qui est le plus adapté à la conduite identifiée.

Il est également possible d'imposer à la puissance de freinage un seuil maximum, ce seuil étant en relation avec un écart entre une valeur mesurée par un capteur 9 et une valeur mémorisée dans la mémoire 16. Un tableau de correspondance entre lesdits écarts et lesdits seuils peut être mémorisé dans la mémoire 16.

Suite à l'ordre transmis par le logiciel 20, le système 19 de freinage du véhicule 1 réduit ou limite le freinage des roues avant 5. Dans le cas d'un système hydraulique de freinage, la pression du groupe hydraulique de freinage diminue sur les roues avant 5. La diminution de la décélération des roues avant 5 permet aux roues arrière 3 de reprendre contact avec le sol.

Selon une forme préférentielle de l'invention, un dispositif tel que représenté à la figure 2 est intégré à un dispositif ABS ou à un dispositif ESP dont est par ailleurs équipé le véhicule 1.

## Revendications

1. - Procédé destiné à commander un système (19) de freinage dans un véhicule (1), le véhicule comprenant au moins une roue avant (5) et au moins une roue arrière (3),
**caractérisé en ce qu'**il comprend les étapes suivantes :
- détermination de l'existence d'au moins une condition de soulèvement de la roue arrière (3), et
- si au moins une telle condition est déterminée comme existante, limitation et/ou réduction du freinage appliqué sur la roue avant (5) par le système (19) de freinage du véhicule.

2. - Procédé selon la revendication 1, **caractérisé en ce qu'**une condition de soulèvement de la roue arrière est déterminée comme existante lorsqu'une décélération du véhicule (1) dépasse une valeur prédéterminée.

3. - Procédé selon la revendication 2 **caractérisé en ce que** la valeur prédéterminée de la décélération du véhicule est comprise entre 7m/s² et 10,3m/s², de préférence entre 8ms/² et 9,7m/s².

4. - Procédé selon la revendication 1, 2 ou 3, **caractérisé en ce qu'**une condition de soulèvement de la roue arrière (3) est déterminée comme existante lorsqu'une accélération positive de la roue arrière (3) dépasse une valeur prédéterminée.

5. - Procédé selon la revendication 4, **caractérisé en ce que** la valeur prédéterminée d'accélération positive de la roue arrière (3) est comprise entre 2,5m/s² et 7m/s², de préférence entre 3,5m/s² et 5,5m/s².

6. - Procédé selon l'une des revendications précédentes, **caractérisé en ce qu'**une condition de soulèvement de la roue arrière (3) est déterminée comme existante lorsqu'un rapport de vitesses de la roue avant (5) et de la roue arrière (3) dépasse une valeur prédéterminée.

7. - Procédé selon l'une des revendications précédentes, **caractérisé en ce qu'**une condition de soulèvement de la roue arrière (3) est déterminée comme existante lorsqu'un rapport de décélérations de la roue arrière (3) et de la roue avant (5) dépasse une valeur prédéterminée.

8. - Procédé selon l'une des revendications précédentes, **caractérisé en ce qu'**une condition de soulèvement de la roue arrière (3) est déterminée comme existante lorsqu'une vitesse de glissement de l'une au moins des roues dépasse une valeur prédéterminée.

9. - Procédé selon la revendication 8, **caractérisé en ce que** ladite valeur de glissement de la roue arrière (3) est comprise entre 1 % et 5%, de préférence entre 1,9% et 3%.

10. - Dispositif destiné à commander un système de freinage dans un véhicule, le véhicule comprenant au moins une roue avant et au moins une roue arrière, **caractérisé en ce qu'**il comporte des moyens de mise en oeuvre d'un procédé selon l'une des revendications 1 à 6.

11. - Véhicule équipé d'un dispositif selon la revendication 10.
